Europäisches Patentamt

European Patent Office

Office européen des brevets

(11) Publication number: **0 012 023**
**A1**

# EUROPEAN PATENT APPLICATION

(21) Application number: **79302733.5**

(22) Date of filing: **30.11.79**

(51) Int. Cl.³: **F 16 H 3/08**
**B 60 K 41/26, B 60 T 1/06**

(30) Priority: **05.12.78 GB 4713878**

(43) Date of publication of application:
**11.06.80 Bulletin 80/12**

(84) Designated Contracting States:
**DE FR IT SE**

(71) Applicant: **Windsor-Smith, Claude Peter**
**33 Main Street**
**Ashley, near Market Harborough Leicestershire(GB)**

(71) Applicant: **Tailby, Raymond Alfred**
**40 Moat Road**
**Loughborough Leicestershire(GB)**

(72) Inventor: **Windsor-Smith, Claude Peter**
**33 Main Street**
**Ashley, near Market Harborough Leicestershire(GB)**

(72) Inventor: **Tailby, Raymond Alfred**
**40 Moat Road**
**Loughborough Leicestershire(GB)**

(74) Representative: **Wilson, Thomas Arthur Fletcher**
**10, Grosvenor House Grosvenor Road**
**Coventry West Midlands, CV1 3FZ(GB)**

(54) Change speed gear.

(57) Change speed gear more especially for vehicle use is provided in which ratios of the gear in one direction are transmitted by gear members (11, 12) on respective layshafts (1, 2, 3, 4) from input to output shafts (5, 6), a gear member (12) of each layshaft (1, 2, 3, 4) being arranged to be selectively fully clutched by a respective clutch (10, 20, 30, 40) thereto for transmitting a drive at the corresponding ratio. The arrangement is such that when such a gear member (12) is fully clutched to its layshaft (3 or 4) for transmitting a high ratio drive (e.g. for 3rd or 4th gear) at least one other such low ratio gear member (12) (e.g. for 1st or 2nd gear) is arranged to be partially clutched as and when required to its layshaft (1 or 2) in order to obtain retardation of the high ratio drive transmission. Preferably both gear members (12) (e.g. for 1st and 2nd gears) are simultaneously partially clutched to their layshafts (1 and 2) in order that the retardation is more fully and smoothly effected through the gear system on the drive transmitted.

./...

FIG.1

FIG.2.

0012023

This invention relates to change speed gear primarily for motor vehicle transmission and more particularly of the kind in which layshaft gearing in constant mesh with input and output shaft gearing includes layshaft gears arranged to be selectively clutched to respective layshafts in effecting a required drive transmission ratio.

The object of this invention is to provide an improved arrangement of change speed gear whereby a retarding action can be obtained, e.g. to brake, or assist the braking of, a vehicle provided with the change speed gear. This and other practical advantages will be apparent from the following disclosure.

According to this invention change speed gear is provided wherein ratios of the gear in one direction are transmitted by gear members on respective layshafts from input to output shafts of the change speed gear, a gear member of each layshaft being arranged to be selectively fully clutched by respective clutch thereto for transmitting a drive at the corresponding ratio and is characterised by the arrangement whereby when such a gear member is fully clutched to its layshaft for transmitting a high ratio drive at least one other such low ratio gear member (e.g. for 1st or 2nd gear) is arranged to be partially clutched as and when required to its layshaft in order to obtain retardation of the high ratio drive transmission.

In the practical application of the invention to a vehicle transmission gearbox, the construction and arrangement is as follows, reference being had to the accompanying diagrammatic drawings in which :-

| | |
|---|---|
| FIGURE 1 | is a generally axial plane section of the gearbox, |
| FIGURE 2 | is an end view in the direction of the arrow II of FIGURE 1, |
| FIGURES 3 to 6 | are gear train diagrams of each forward speed ratio, and |
| FIGURES 7 to 9 | are diagrammatic views of retardation control means. |

Like parts are referred to by the same or similar reference designation throughout the drawings.

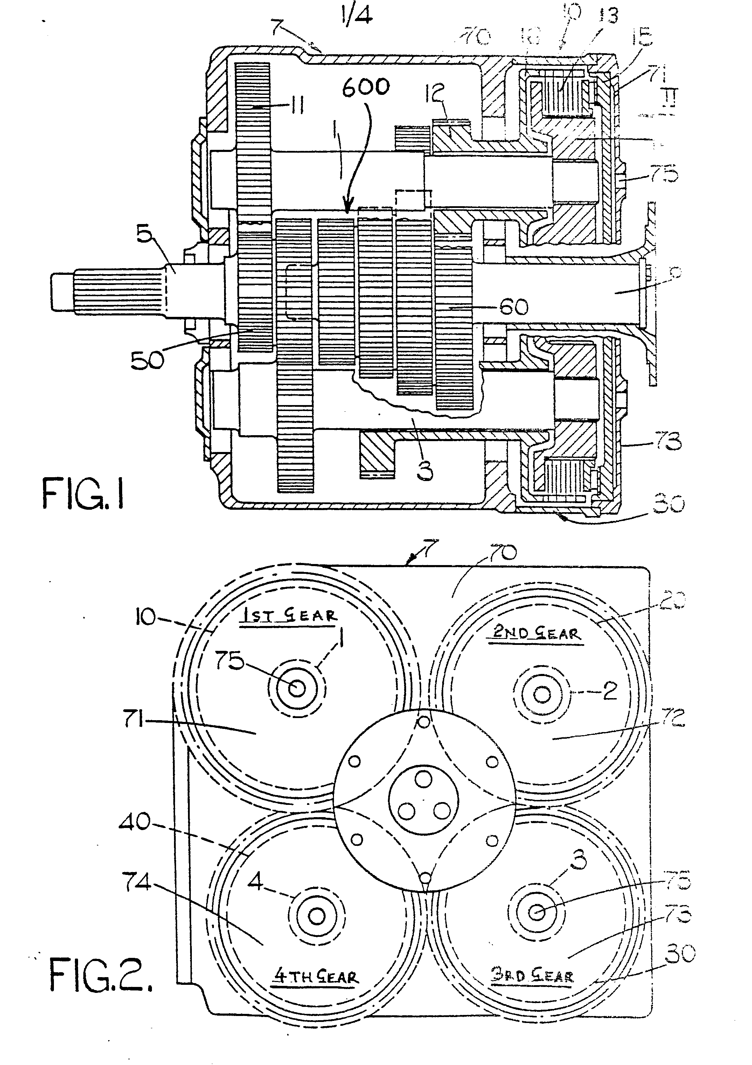

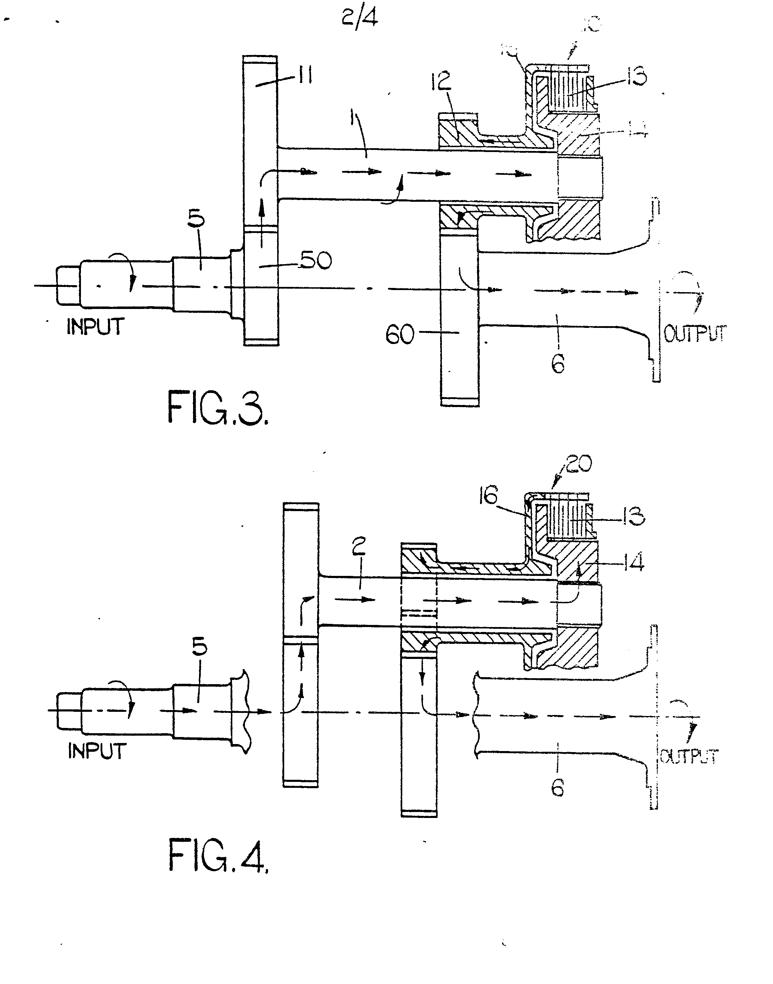

Referring to FIGURES 1 and 2 a straight through gearbox providing four forward speed ratios is shown in which each such ratio is effected through lay gearing on a corresponding layshaft so that there is a layshaft 1, 2, 3 and 4 for each ratio.

Thus in the case of the first gear layshaft 1 shown in the upper part of FIGURE 1, and in FIGURE 3, a lay gear 11 fast therewith constantly meshes with a corresponding gear 50 on the input shaft 5 whilst a further lay gear 12 on the layshaft 1 is arranged to be clutched to the latter by means of a clutch 10 at one end of the layshaft 1, which clutch 10 is shown of the multi-disc type arranged for fluid pressure (e.g. hydraulic or pneumatic) operation.    On the gear 12 being clutched to the layshaft 1 a first or low gear ratio is transmitted to a corresponding gear 60 of a cluster 600 of such gears on the output shaft 6.

The disc pack 13 of the clutch 10 is acted upon by a piston 15 for effecting a drive between the hub 14 of the clutch fast with the layshaft 1 and a spider 16 fast with the lay gear 12.

As will be evident from FIGURE 2, the layshafts 1, 2, 3 and 4 for the corresponding ratios are disposed about the input and output shafts 5 and 6 in a symmetrical and axially parallel manner with each clutch 10, 20, 30, 40 on its associated layshaft 1, 2, 3, 4 being disposed at the same end of the gearbox 7.    Thus by removal of end covers 71, 72, 73, or 74 of the gearbox casing 70, access is immediately afforded to all four clutches 10, 20, 30, 40 for servicing and/or replacement purposes in a simple and convenient manner, i.e. as set forth in the specification of our co-pending patent application No.          .

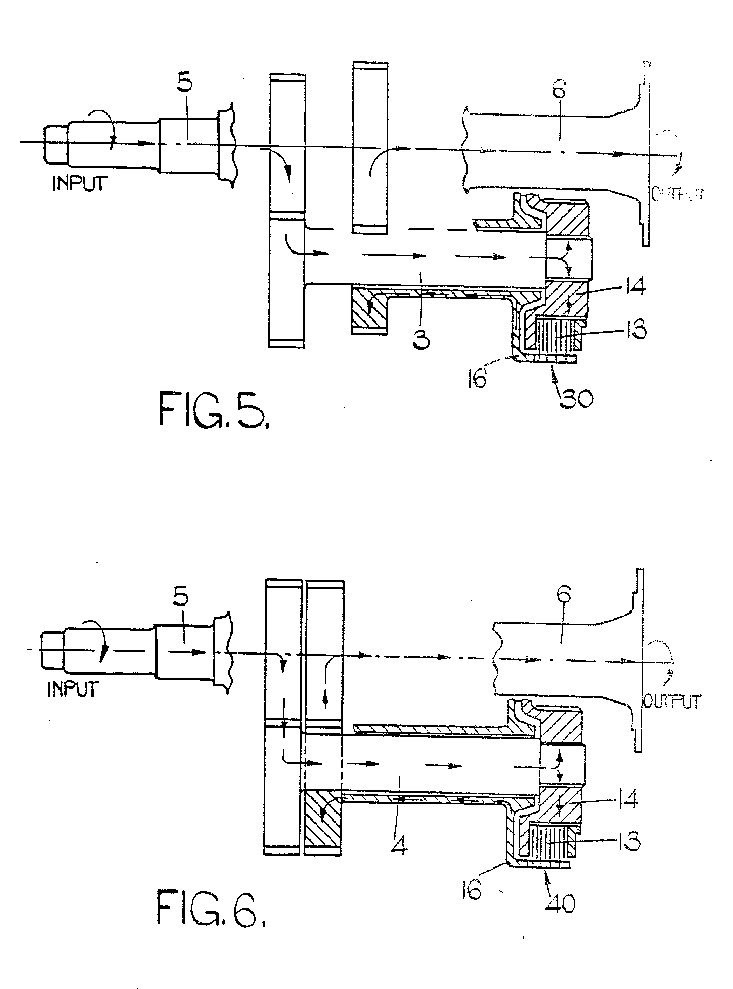

The four forward speed gear ratio trains provided by the gearbox by operation of the corresponding layshaft clutches 10, 20, 30, 40 are indicated in FIGURES 3 to 6 where in each case a smooth engagement and disengagement can be effected by

0012023

selective fluid pressure operation of the appropriate clutch.
The provision of reverse gear is not shown but can be effected
in any known or suitable manner, e.g. by dog clutch operation
of a constant mesh train.

In accordance with this invention and when it is desired to
effect retardation of a particular high ratio drive transmission
via a fully clutched lay gear 12 and corresponding layshaft 3
or 4, the clutch 10 or 20 of at least one low ratio lay gear 12
and layshaft 1 or 2 is arranged to be partially engaged and
thus operates as a brake in retarding the drive transmission
effected.     This provides braking of the vehicle, e.g. when
stopping or running downhill usually by assisting the normal
braking of the vehicle for these purposes.

In order to provide a more effective and distributed retarding
action, the clutches 10 and 20 of both low ratio gears of the
layshafts 1 and 2 are partially engaged so that retardation is
more fully and smoothly effected through the gear system on the
drive transmitted.

Such retarding action has particular application to the fourth
or top gear ratio as well as to the third gear ratio (FIGURE 2)
in which case the clutch 10 for the first gear ratio and that 20
for the second gear are both partially engaged to obtain the
retarding action.

Control of hydraulic or other fluid under pressure to the
clutch pistons 15 is effected through suitable selector

0012023

valves for obtaining required operation of the appropriate clutches viz: low pressure partial operation of the clutches 10 and/or 20 with full pressure drive transmission operation of the clutch 30 or 40.

Retardation of first and second gear ratio drives is not normally necessary due to the ratios transmitted and slow speed operation of the vehicle in these gears.

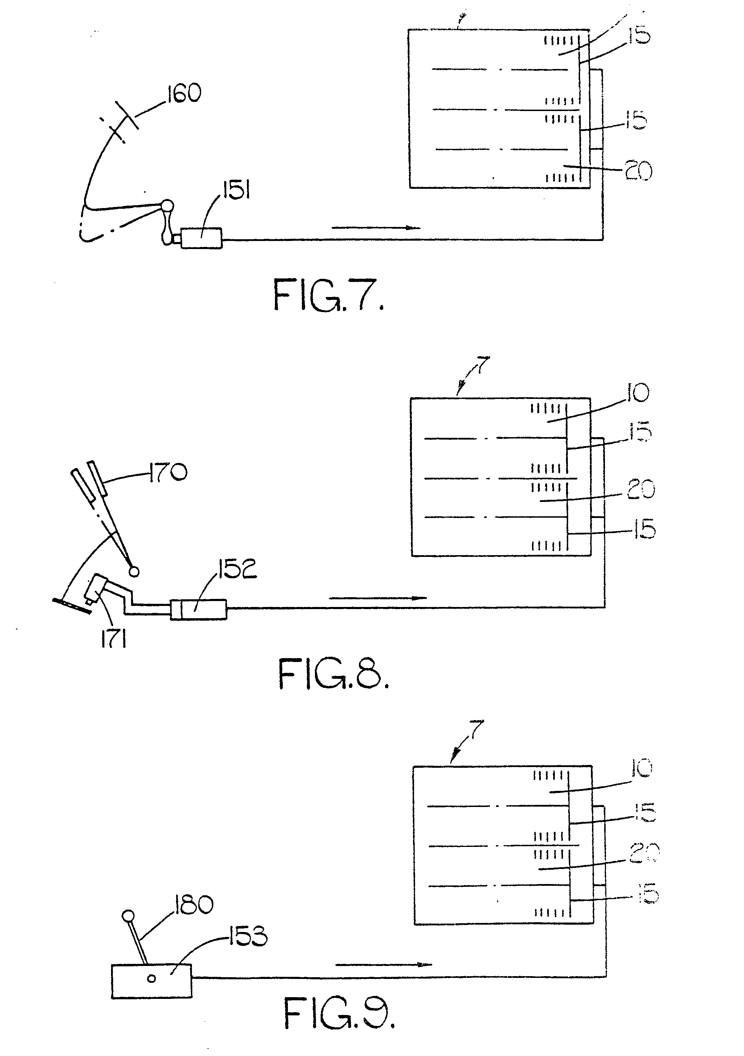

Low pressure partial operation of the clutches 10 and/or 20 may be effected or controlled in various ways. Thus as indicated in FIGURE 7 initial application movement of the vehicle brake pedal 160 actuates a valve 151 for supplying fluid (e.g. air) under low pressure to act on the pistons 15 of the clutches 10 and/or 20 in order to obtain the retarding action which thus automatically assists the braking of the vehicle.

Generally by way of an alternative mode of obtaining the retardation to that indicated in FIGURE 7, the arrangement of FIGURE 8 can be followed in which release of accelerator or similar control of the vehicle engine or motor, e.g. complete release of the accelerator pedal 170 conditions a valve 152 for causing low pressure operation of the clutches 10 and/or 20. In the example shown final release movement of the accelerator pedal 170 is arranged to operate a microswitch 171 controlling electric (e.g. solenoid) operation of the valve 152 in automatically obtaining retardation independently of any vehicle brake application, i.e. with or

0012023

without separate brake application.

In FIGURE 9 provision for hand controlled operation of a
valve 153 for causing low pressure operation of the clutches
10 and/or 20 at will is indicated, which hand control can be
the sole means of effecting the retardation or can be provided
for secondary use in relation to either of the automatic means
shown in FIGURES 7 and 8, i.e. either with such means or independently thereof.   Particularly in the case of the brake
associated operation of FIGURE 7 the operation of the valve
153 by the hand lever 180 can be employed to effect retardation
without brake application such as when the vehicle is descending
a gentle gradient.·   The hand control means may also provide a
second or over-ride control of the retardation, e.g. in the
event of failure of the automatic control means of FIGURE 7 or 8
or to augment either of them.

The degree of retardation obtained may be variable according to
the extent of operation of any of the valves 151, 152 or 153,
(especially the hand controlled valve 153) for obtaining corresponding low pressure operation of the clutches 10 and/or 20.

The provision for retardation according to this invention and
as herein described is also applicable to gearboxes of
generally the same arrangement but having side input shaft
drives as further described in the specification of our co-
pending patent application No.                          .

Whereas the provision for retardation is particularly applicable to change speed gear of the kind described, i.e. in which the clutches are situated at the same ends of corresponding layshafts for access purposes, the arrangement for retardation according to this invention is also applicable to change speed gear in which the clutches are otherwise positioned on the layshafts.

The invention has particular practical application to the gearboxes of motor driven land vehicles of various kinds such as road or rail vehicles and especially of omnibuses or similar public service road vehicles.   However it is generally applicable to motor driven change speed gear for various purposes where retardation of mechanism driven thereby is required.

0012023

## CLAIMS

1. Change speed gear wherein ratios of the gear in one direction are transmitted by gear members (11, 12) on respective layshafts (1, 2, 3, 4) from input to output shafts (5, 6) of the change speed gear, a gear member (12) of each layshaft (1, 2, 3, 4) being arranged to be selectively fully clutched by respective clutch (10, 20, 30 or 40) thereto for transmitting a drive at the corresponding ratio and characterised by the arrangement whereby when such a gear member (12) is fully clutched to its layshaft (3 or 4) for transmitting a high ratio drive (e.g. for 3rd or 4th gear) at least one other such low ratio gear member (12) (e.g. for 1st or 2nd gear) is arranged to be partially clutched as and when required to its layshaft (1 or 2) in order to obtain retardation of the high ratio drive transmission.

2. Change speed gear according to claim 1 wherein two such low ratio gear members (12) (e.g. for 1st and 2nd gears) are arranged to be simultaneously partially clutched as and when required to their layshafts (1 and 2) in order to obtain retardation of the high ratio drive transmission.

3.  Change speed gear according to claim 1 or 2 wherein
the clutches (10, 20, 30, 40) are each selectively
actuated by corresponding fluid pressure operated
piston means (15) and wherein the clutches (10 and/or
20) to the low ratio gear members (12) (e.g. for 1st
and/or 2nd gears) are arranged to be actuated for
partial clutching of their associated gear member or
members (12) by low or reduced pressure operation of
the corresponding piston means (15).

4.  Change speed gear according to any of the preceding
claims wherein control means (151) for effecting partial
clutching of a said gear member or gear members (12) is
arranged to be automatically operated with operation (160)
of separate brake mechanism, e.g. of a motor driven
vehicle in which the change speed gear is incorporated
in the vehicle drive transmission.

5.  Change speed gear according to claim 4 wherein the
control means (151) is operated on initial brake
application operation (160) of the separate brake
mechanism.

6.   Change speed gear according to claim 4 or 5 wherein
     the control means such as a valve (151) controlling
     fluid pressure operation of the partial clutching
     of a said gear member or gear members (12) is operated
     from a separate brake operating member such as a
     foot pedal (160)  e.g. on initial brake application
     movement of the latter.

7.   Change speed gear according to any of the preceding
     claims wherein control means (152) for effecting partial
     clutching of a said gear member or gear members (12) is
     arranged to be automatically operated on release operation
     of accelerator (170) or similar speed control of an
     engine or motor driving the gear.

8.   Change speed gear according to claim 7 wherein the
     control means (152) is operated on final release operation
     of the accelerator (170) or similar speed control.

9.   Change speed gear according to claim 7 or 8 wherein
     the control means such as a valve (152) controlling fluid
     pressure operation of the partial clutching of a said
     gear member or gear members (12) is operated from an
     accelerator or similar speed control member such as an
     accelerator pedal (170), e.g. on final release operation
     of the latter.

0012023

10. Change speed gear according to any of the preceding
    claims wherein control means (153) for effecting partial
    clutching of a said gear member or gear members (12)
    is arranged for operation at will such as by hand
    control (180).

FIG.1

FIG.2.

1/4

0012023

INPUT

5

50

11

1

12

16

13

14

60

6

OUTPUT

## FIG.3.

INPUT

5

2

16

20

13

14

6

OUTPUT

## FIG.4.

FIG.5.

FIG.6.

FIG.7.

FIG.8.

FIG.9.

0012023

European Patent Office

EUROPEAN SEARCH REPORT

Application number

EP 79 302 733.5

## DOCUMENTS CONSIDERED TO BE RELEVANT

| Category | Citation of document with indication, where appropriate, of relevant passages | Relevant to claim |
|---|---|---|
| | DE - A - 1 555 924 (A. IRION NACH-FOLGER) <br> * claim 7 * <br> -- | 1 |
| A | DE - A - 1 755 971 (CATERPILLAR) <br> * complete document * <br> -- | |
| A | FR - A - 894 670 (VOITH) <br> * complete document * <br> ---- | |

**CLASSIFICATION OF THE APPLICATION (Int. Cl.)**

F 16 H 3/08
B 60 K 41/26
B 60 T 1/06

**TECHNICAL FIELDS SEARCHED (Int.Cl.3)**

B 60 K 41/00
B 60 T 1/00
F 16 H 3/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 03-03-1980 | BECKER |

EPO Form 1503.1 06.78